# FASCICULE DE BREVET EUROPEEN

(11) **EP 2 538 456 B1**
(45) Date de publication et mention de la délivrance du brevet: **19.03.2014**
(21) Numéro de dépôt: 12172111.2
(22) Date de dépôt: 15.06.2012
(51) Int. Cl.: H01L 31/0525

(54) **Module solaire hybride photovoltaïque/thermique**
Hybrider, photovoltaischer/thermischer Solarmodul
Hybrid photovoltaic/thermal solar module

(30) Priorité: 20.06.2011 FR 1155378
(43) Date de publication de la demande: 26.12.2012
(73) Titulaire: Straboni, Alain, 86180 Buxerolles (FR)
(72) Inventeur: Straboni, Alain, 86180 Buxerolles (FR)
(74) Mandataire: de Beaumont, Michel

(56) Documents cités:
- WO-A1-99/10934
- WO-A1-2007/129985
- WO-A2-2008/143482
- US-A1- 2005 133 082

## Description

### Domaine de l'invention

La présente invention concerne les modules ou panneaux solaires hybrides photovoltaïques/thermiques.

### Exposé de l'art antérieur

Un module solaire photovoltaïque comprend un ensemble de cellules photovoltaïques permettant de convertir l'énergie du rayonnement solaire arrivant sur les cellules en énergie électrique. Le rendement de conversion photovoltaïque est d'environ 10 à 20% suivant le type de cellules photovoltaïques utilisées. Ce rendement diminue lorsque la température des cellules photovoltaïques augmente, entraînant une réduction de la puissance électrique fournie par le module. Sous éclairement fort et en l'absence de vent, la température d'un module peut augmenter fortement par rapport à sa température de fonctionnement de référence (25°C), par exemple dépasser 100°C. Le document WO99/10934 décrit un module solaire.

Les modules solaires hybrides photovoltaïques/thermiques sont des modules solaires permettant d'une part de convertir l'énergie du rayonnement solaire en énergie électrique, et d'autre part de récupérer l'énergie thermique solaire. Ces modules solaires comprennent un ensemble de cellules photovoltaïques dont une face avant est destinée à être exposée au rayonnement solaire et dont une face arrière est en contact avec un échangeur thermique.

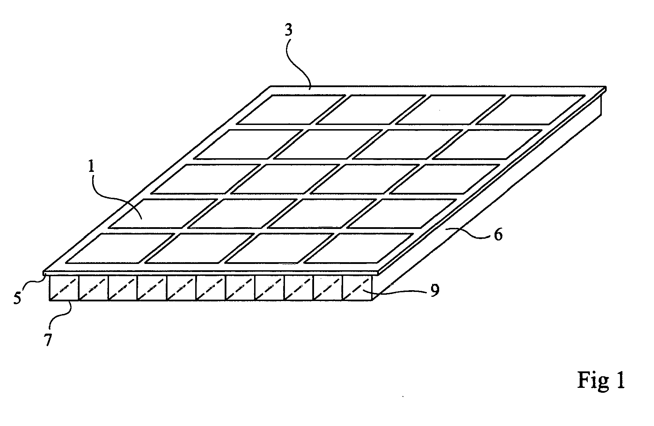

La figure 1 représente un exemple de module solaire hybride photovoltaïque/thermique tel que décrit dans la demande de brevet français N° 2 924 864.

Le module comprend un ensemble de cellules photovoltaïques 1 reposant sur un support 5. Les faces avant 3 des cellules sont destinées à être exposées au rayonnement solaire. De façon classique, ces faces avant sont collées par l'intermédiaire d'un film polymère en EVA (Ethyl Vynil Acetate) à une plaque avant transparente, le plus souvent en verre.

Un échangeur thermique 6 est fixé sous le support 5 du module et comprend au moins un conduit 7. A l'intérieur des conduits 7 circule un fluide de refroidissement 9, par exemple de l'air ou de l'eau. Les conduits 7 assurent le transfert thermique de la chaleur emmagasinée par les cellules 1 vers le fluide de refroidissement 9.

L'énergie thermique collectée par l'échangeur thermique 6 peut être utilisée pour chauffer l'eau ou l'air des bâtiments sur lesquels est fixé le module.

Un inconvénient de tels modules solaires hybrides photovoltaïques/thermiques réside dans le fait qu'à cause du contact intime entre cellules, film d'EVA et verre, une partie de la chaleur reçue par les cellules est dissipée par conduction dans le verre et par convection avec l'air extérieur, surtout en présence de vent.

Un autre inconvénient de tels modules solaires hybrides photovoltaïques/thermiques réside dans leur coût de fabrication élevé.

Un autre inconvénient de tels modules solaires hybrides photovoltaïques/thermiques est lié au coût des couches de polymère, par exemple en EVA, utilisées pour protéger les cellules.

### Résumé

Un objet d'un mode de réalisation de la présente invention est d'augmenter le rendement de modules solaires hybrides photovoltaïques/thermiques.

Un autre objet d'un mode de réalisation de la présente invention est de réduire le coût de fabrication de modules solaires hybrides photovoltaïques/thermiques.

Ainsi, un mode de réalisation de la présente invention prévoit un module solaire hybride photovoltaïque/thermique comprenant des cellules photovoltaïques présentant une face avant destinée à être exposée au rayonnement solaire ; une plaque métallique liée aux faces arrière des cellules et isolée électriquement de celles-ci ; des conduits adaptés à contenir un fluide caloporteur, en contact thermique avec la plaque métallique ; une plaque arrière disposée au-dessous des conduits ; des premiers moyens d'espacement maintenant un premier espace entre la plaque arrière et la plaque métallique ; une plaque transparente disposée au-dessus des cellules ; et des seconds moyens d'espacement maintenant un deuxième espace entre la plaque transparente et les cellules ; dans lequel le premier espace et le deuxième espace sont mis sous vide ou remplis d'un gaz à basse pression.

Selon un mode de réalisation de la présente invention, les seconds moyens d'espacement comprennent une grille solidaire de la plaque métallique, formant un quadrillage entre les cellules.

Selon un mode de réalisation de la présente invention, la grille comporte des plots en contact avec la plaque transparente.

Selon un mode de réalisation de la présente invention, les plots sont en graphite.

Selon un mode de réalisation de la présente invention, les conduits sont soudés à la plaque métallique.

Selon un mode de réalisation de la présente invention, la plaque métallique est en acier, en dural ou en un alliage à base de cuivre.

Selon un mode de réalisation de la présente invention, la plaque métallique a une épaisseur comprise entre 1 et 2 mm.

Selon un mode de réalisation de la présente invention, l'épaisseur de la plaque transparente est comprise entre 3 et 5 mm.

Selon un mode de réalisation de la présente invention, la largeur des cellules correspond au quart de leur longueur.

Selon un mode de réalisation de la présente invention, la plaque arrière est une feuille souple.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1, décrite précédemment, est une vue en perspective illustrant un module solaire hybride classique photovoltaïque/thermique ;
la figure 2 est une vue en perspective illustrant une portion d'un module solaire hybride photovoltaïque/thermique selon un mode de réalisation de la présente invention ; et
la figure 3 est une vue de dessus d'une portion d'un module solaire hybride photovoltaïque/thermique selon un mode de réalisation de la présente invention.

### Description détaillée

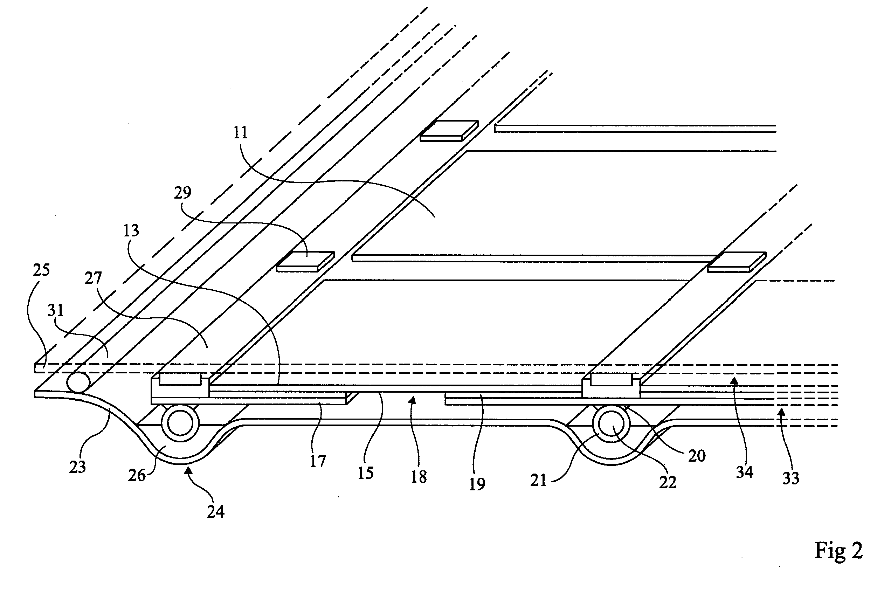

La figure 2 représente une portion d'un module solaire hybride photovoltaïque/thermique selon un mode de réalisation de la présente invention.

Ce module comprend un ensemble de cellules photovoltaïques 11, par exemple en silicium, dont les faces avant 13 sont destinées à être exposées au rayonnement solaire. Les faces arrière 15 des cellules 11 sont liées à une plaque métallique 17, avec interposition d'une feuille 19 d'un matériau conducteur thermique mais isolant électrique, par exemple une feuille en Mylar.

Le matériau constituant la plaque métallique 17 est par exemple de l'acier, du dural ou un alliage à base de cuivre, ou tout autre matériau bon conducteur thermique. A titre d'exemple, l'épaisseur de la plaque métallique 17 est comprise entre 1 et 2 mm, par exemple 1 mm.

La plaque métallique 17 comporte des ouvertures 18 dont chacune est disposée sensiblement au centre de chaque zone de réception d'une cellule photovoltaïque. Les ouvertures 18 permettent d'éviter ou à tout le moins de limiter l'apparition de contraintes liées à des différences de coefficients de dilatation thermique.

Des conduits 21 sont fixés à la plaque métallique 17, sous celle-ci. Ces conduits sont en un matériau conducteur thermique, par exemple un métal. Ils sont par exemple soudés ou brasés à la plaque métallique 17 dans leur région de contact 20 avec celle-ci. Ces conduits s'étendent de préférence entre les régions occupées par les cellules 11.

Une plaque arrière 23 est constituée d'un matériau capable d'assurer l'étanchéité avec l'extérieur. Elle peut être en tout matériau choisi, par exemple en métal, en polymère ou en verre. Ce peut être une plaque souple. La plaque arrière 23 comporte des ondulations 24 adaptées à recevoir les conduits 21. Une grille 26, constituée d'un matériau thermiquement isolant, est adaptée à remplir les ondulations de la plaque 23. Les conduits 21 reposent sur cette grille 26. La plaque 23 est ainsi isolée thermiquement des conduits 21. Un espace 33 est ménagé entre la plaque métallique 17 et la plaque arrière 23.

Une plaque transparente 25, par exemple en verre trempé, représentée en pointillés, est disposée au-dessus des faces avant 13 des cellules 11, un espace 34 étant ménagé entre la plaque transparente 25 et les faces avant 13 des cellules 11. La plaque 25 est posée sur une grille 27, de préférence en un matériau thermiquement isolant, par exemple en céramique, formant un quadrillage entre les cellules 11. Cette grille 27 est fixée à la plaque métallique 17, au-dessus de celle-ci. Une partie de cette grille 27, par exemple la face supérieure, est électriquement isolante ; cette partie isolante sert alors de support aux connections électriques entre cellules, par exemple des rubans métalliques rapportés sur la face supérieure isolante de la grille.

Les espaces 33 et 34 sont mis sous vide ou occupés par un gaz à basse pression. Le gaz à basse pression peut être de l'argon à une pression comprise entre un centième et un millième de la pression atmosphérique. La pression atmosphérique exerce de fortes contraintes mécaniques sur la plaque transparente 25. Grâce à la grille 27 sur laquelle la plaque transparente 25 repose, les contraintes sont réparties sur la surface de la plaque 25, ce qui permet de réduire la contrainte en flexion exercée sur celle-ci. La plaque transparente 25 peut avoir une épaisseur comprise entre 3 et 5 mm, par exemple 4 mm. Dans le mode de réalisation représenté, la grille 27 comporte des plots 29, en contact avec la plaque transparente 25, placés aux coins des cellules. Ces plots 29 sont soit collés à la plaque 25 soit laissés libres et sont dans ce cas en un matériau présentant un très faible coefficient de frottement avec la plaque transparente 25, par exemple en graphite dans le cas où la plaque 25 est en verre. Les déplacements engendrés par les dilatations thermiques du module liées par exemple à l'alternance jour/nuit sont alors autorisés. Les plots 29 peuvent être au nombre de 100 à 300 par m².

Un joint 31, par exemple en silicone, est disposé à la périphérie du module entre la plaque transparente 25 et la deuxième plaque métallique 23. Ce joint assure l'étanchéité des espaces 33 et 34. On pourrait aussi prévoir une bande de matériau rigide collée aux plaques 25 et 23.

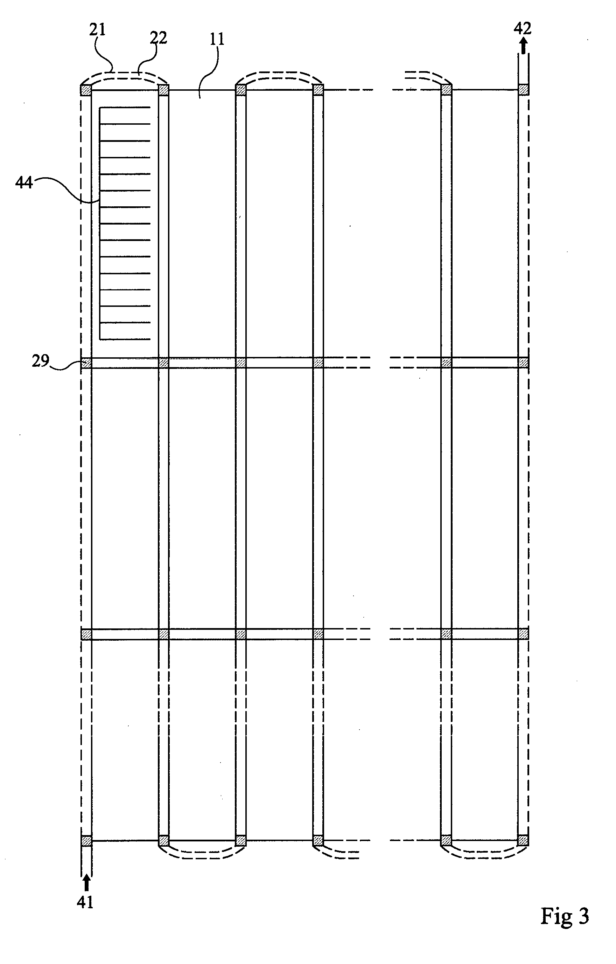

Certains éléments du module de la figure 2 sont mieux visibles dans la vue de dessus en figure 3. Cette figure illustre l'agencement des cellules 11 en lignes et en colonnes. A titre d'exemple, la longueur des cellules est de 12,5 ou 15 cm, et leur largeur correspond au quart de leur longueur.

Les conduits 21 forment un serpentin courant entre les cellules 11, en-dessous de celles-ci. Un fluide 22 est acheminé vers les conduits 21 par une arrivée 41 et est évacué des conduits par une sortie 42.

Les cellules 11 sont connectées par exemple en série par des connexions électriques. On peut aussi connecter une partie des cellules en parallèle ; certaines cellules peuvent aussi avoir leurs deux électrodes sur la même face avant ou sur la même face arrière. Les électrodes placées sur les faces avant 13 de chaque cellule sont couramment en forme de peigne. Une seule de ces électrodes 44 est représentée en figure 3. La forme particulière de ces électrodes permet de n'arrêter qu'une faible partie du rayonnement solaire arrivant sur les cellules 11. Les électrodes placées sous les faces arrière 15 des cellules sont classiques.

Pour connecter les cellules 11 en série, l'électrode de la face avant d'une cellule est connectée à l'électrode de la face arrière de la cellule suivante. La puissance électrique fournie par les cellules est récupérée en sortie du circuit électrique ainsi formé. Plusieurs modules peuvent être raccordés entre eux.

Un avantage de la structure décrite ci-dessus est que sa fabrication et son montage sont particulièrement simples :
- on prépare la plaque métallique 23, la grille 26 et la plaque transparente 25 ;
- on prépare la plaque métallique 17 au-dessus de laquelle on fixe les cellules 11 et la grille 27 contenant les plots 29, et au-dessous de laquelle on fixe les conduits 21 ;
- on dispose la grille isolante 26 dans les ondulations 24 de la plaque métallique 23, puis on pose l'ensemble comprenant la plaque métallique 17 et les cellules 11 en insérant les conduits 21 dans les espaces prévus dans la grille 26 ;
- on pose ensuite la plaque transparente 25 sur les plots 29, en positionnant le joint 31 à la périphérie du module entre la plaque transparente 25 et la plaque métallique 23 ; et
- on met les espaces 33 et 34 sous vide, et/ou on les remplit d'un gaz à basse pression.

Le fonctionnement d'un module du type décrit ci-dessus, placé par exemple sur le toit ou contre les murs d'un bâtiment, est le suivant.

La face avant 13 des cellules 11 est exposée au rayonnement solaire. Une partie de l'énergie solaire reçue par les cellules est convertie en énergie électrique.

La chaleur produite par l'énergie thermique solaire sur les cellules est collectée par le fluide 22, couramment de l'eau ou de l'air, circulant dans les conduits 21. Elle peut être utilisée pour réchauffer l'air du bâtiment en saison froide. De plus, un tel module peut aussi être utilisé pour refroidir l'air d'un bâtiment en saison chaude, en faisant circuler, la nuit, le fluide 22 dans les conduits 21.

Un module solaire photovoltaïque/thermique tel que représenté en figure 2 est isolé des échanges thermiques avec l'extérieur par les espaces 33 et 34. La chaleur générée dans les cellules 11 est donc récupérée par le fluide 22 avec très peu de pertes. Les pertes par convection et par conduction sont réduites grâce aux espaces 33 et 34.

Le fluide 22 permet de transférer directement l'énergie thermique vers le local d'habitation en y chauffant l'air ambiant ou de l'eau sanitaire. Cette énergie peut être aussi transférée aux locaux d'habitation et à l'eau sanitaire par l'intermédiaire d'une pompe à chaleur. L'été, dans les périodes nocturnes, le rafraichissement des locaux peut être assuré par le biais du fluide 22 grâce à un échange thermique entre les cellules et le fond du ciel.

Le fluide 22 circulant dans les conduits 21, en plus de récupérer l'énergie thermique solaire, permet de refroidir les cellules 11 pour augmenter la puissance électrique fournie par le module.

Ainsi, le rendement de tels modules solaires hybrides photovoltaïques/thermiques est augmenté par rapport à celui de modules solaires hybrides photovoltaïques/thermiques classiques.

De plus, la fabrication et le montage de tels modules solaires hybrides photovoltaïques/thermiques sont particulièrement simples.

Les cellules étant mises dans une enceinte étanche, il n'est pas nécessaire de les protéger par un polymère transparent.

Le coût de fabrication de tels modules est ainsi diminué par rapport à celui de modules solaires hybrides photovoltaïques/thermiques classiques.

Des modes de réalisation particuliers de la présente invention ont été décrits. Diverses variantes et modifications apparaîtront à l'homme de l'art. En particulier, on a décrit ici un mode de réalisation de la présente invention dans lequel les conduits 21 s'étendent entre les régions occupées par les cellules 11 ; les conduits peuvent s'étendre sous la plaque métallique 17 en tout emplacement permettant d'établir un contact thermique avec celle-ci. De plus, le joint 31 peut être remplacé par tout moyen d'étanchéité permettant de maintenir le vide ou un gaz à basse pression dans les espaces 33 et 34.

## Revendications

1. Module solaire hybride photovoltaïque/thermique comprenant :
des cellules photovoltaïques (11) présentant une face avant (13) destinée à être exposée au rayonnement solaire ;
une plaque métallique (17) liée aux faces arrière (15) des cellules et isolée électriquement de celles-ci ;
des conduits (21) adaptés à contenir un fluide caloporteur, en contact thermique avec la plaque métallique (17) ;
une plaque arrière (23) disposée au-dessous des conduits (21) ;
des premiers moyens d'espacement maintenant un premier espace (33) entre la plaque arrière (23) et la plaque métallique (17) ;
une plaque transparente (25) disposée au-dessus des cellules (11) ; et
des seconds moyens d'espacement maintenant un deuxième espace (34) entre la plaque transparente (25) et les cellules (11) ; **caractérisé en ce que**
le premier espace (33) et le deuxième espace (34) sont mis sous vide ou remplis d'un gaz à basse pression.

2. Module solaire selon la revendication 1, dans lequel les seconds moyens d'espacement comprennent une grille (27) solidaire de la plaque métallique (17), formant un quadrillage entre les cellules (11).

3. Module solaire selon la revendication 2, dans lequel la grille (27) comporte des plots (29) en contact avec la plaque transparente (25).

4. Module solaire selon la revendication 3, dans lequel les plots (29) sont en graphite.

5. Module solaire selon l'une quelconque des revendications 1 à 4, dans lequel les conduits (21) sont soudés à la plaque métallique (17).

6. Module solaire selon l'une quelconque des revendications 1 à 5, dans lequel la plaque métallique (17) est en acier, en dural ou en un alliage à base de cuivre.

7. Module solaire selon l'une quelconque des revendications 1 à 6, dans lequel la plaque métallique (17) a une épaisseur comprise entre 1 et 2 mm.

8. Module solaire selon l'une quelconque des revendications 1 à 7, dans lequel l'épaisseur de la plaque transparente (25) est comprise entre 3 et 5 mm.

9. Module solaire selon l'une quelconque des revendications 1 à 8, dans lequel la largeur des cellules (11) correspond au quart de leur longueur.

10. Module solaire selon l'une quelconque des revendications 1 à 9, dans lequel la plaque arrière (23) est une feuille souple.

## Patentansprüche

1. Hybrid Photovoltaik-/Thermo-Solarmodul, das folgendes aufweist:
Photovoltaikzellen (11) mit einer Vorderseite (13) zum Aussetzen gegenüber Sonnenstrahlung;
eine Metallplatte (17), die mit der Rückseite (15) der Zellen verbunden ist, und elektrisch gegenüber den Zellen isoliert ist;
Rohre (21), die geeignet sind eine Kühlflüssigkeit zu enthalten, und die im thermischen Kontakt mit der Metallplatte (17) stehen;
eine Rückplatte (23), die unterhalb der Rohre (21) angeordnet ist;
erste Abstandsmittel, welche einen ersten Raum (33) zwischen der Rückplatte (23) und der Metallplatte (17) beibehalten;
eine transparente Platte (25), die oberhalb der Zellen (11) angeordnet ist; und
zweite Abstandsmittel, welche einen zweiten Raum (34) zwischen der transparenten Platte (25) und den Zellen (11) beibehalten;
**dadurch gekennzeichnet, dass** der erste Raum (33) und der zweite Raum (34) einen Unterdruck oder Vakuum aufweisen, oder mit einem Niederdruckgas gefüllt sind.

2. Solarmodul nach Anspruch 1, wobei die zweiten Abstandsmittel ein Gitter (27) aufweisen, das starr an der Metallplatte (17) befestigt ist und ein Gittermuster zwischen den Zellen (11) bildet.

3. Solarmodul nach Anspruch 2, wobei das Gitter (27) Auflagen (29) aufweist, die in Kontakt mit der transparenten Platte (25) stehen.

4. Solarmodul nach Anspruch 3, wobei die Auflagen (29) aus Graphit hergestellt sind.

5. Solarmodul nach einem der Ansprüche 1 bis 4, wobei die Rohre (21) an die Metallplatte (17) geschweißt sind.

6. Solarmodul nach einem der Ansprüche 1 bis 5, wobei die Metallplatte (17) aus Stahl, Dural oder einer kupferbasierten Legierung hergestellt ist.

7. Solarmodul nach einem der Ansprüche 1 bis 6, wobei die Metallplatte (17) eine Dicke zwischen 1 und 2 mm besitzt.

8. Solarmodul nach einem der Ansprüche 1 bis 7, wobei die Dicke der transparenten Platte (25) in dem Bereich von 3 bis 5 mm liegt.

9. Solarmodul nach einem der Ansprüche 1 bis 8, wobei die Breite der Zellen (11) einem Viertel ihrer Länge entspricht.

10. Solarmodul nach einem der Ansprüche 1 bis 9, wobei die Rückplatte (23) ein flexibles Flächenelement ist.

## Claims

1. A hybrid photovoltaic/thermal solar module comprising:
photovoltaic cells (11) having a front surface (13) for being exposed to solar radiation;
a metal plate (17) connected to the rear surfaces (15) of the cells and electrically isolated therefrom;
pipes (21) capable of containing a coolant fluid, in thermal contact with the metal plate (17);
a back plate (23) arranged under the pipes (21);
first spacing means maintaining a first space (33) between the back plate (23) and the metal plate (17);
a transparent plate (25) arranged above the cells (11); and
second spacing means maintaining a second space (34) between the transparent plate (25) and the cells (11);
**characterized in that** the first space (33) and the second space (34) are placed under vacuum or filled with a low-pressure gas.

2. The solar module of claim 1, wherein the second spacing means comprise a grid (27) rigidly attached to the metal plate (17), forming a grid pattern between the cells (11).

3. The solar module of claim 2, wherein the grid (27) comprises pads (29) in contact with the transparent plate (25).

4. The solar module of claim 3, wherein the pads (29) are made of graphite.

5. The solar module of any of claims 1 to 4, wherein the pipes (21) are welded to the metal plate (17).

6. The solar module of any of claims 1 to 5, wherein the metal plate (17) is made of steel, of dural, or of a copper-based alloy.

7. The solar module of any of claims 1 to 6, wherein the metal plate (17) has a thickness between 1 and 2 mm.

8. The solar module of any of claims 1 to 7, wherein the thickness of the transparent plate (25) is in the range from 3 to 5 mm.

9. The solar module of any of claims 1 to 8, wherein the width of the cells (11) corresponds to one quarter of their length.

10. The solar module of any of claims 1 to 9, wherein the back plate (23) is a flexible sheet.
